# EUROPEAN PATENT APPLICATION

(11) **EP 4 672 424 A1**
(43) Date of publication of application: **31.12.2025**
(21) Application number: 24878609.7
(22) Date of filing: 30.07.2024
(51) Int. Cl.: H01M 10/613

(54) **LIQUID COOLING MODULE AND LITHIUM BATTERY ASSEMBLY**

(30) Priority: 19.10.2023 CN 202311363333
(71) Applicant: Hefei Gotion High-Tech Power Energy Co., Ltd., Hefei, Anhui 230012 (CN)
(72) Inventor: LIANG, Xinlong, Hefei, Anhui 230012 (CN); ZHOU, Mingjie, Hefei, Anhui 230012 (CN); LIU, Qing, Hefei, Anhui 230012 (CN); WEI, Zhurong, Hefei, Anhui 230012 (CN); LV, Xixiang, Hefei, Anhui 230012 (CN); CHENG, Qiang, Hefei, Anhui 230012 (CN)
(74) Representative: CAPRI
(86) International application number: PCT/CN2024/108466
(87) International publication number: WO 2025/081957

(57) **Abstract**

Provided are a liquid cooling module and a lithium battery assembly. The liquid cooling module includes: a battery cell module, including liquid cooling plates, and a plurality of battery cells sequentially arranged in a first direction, wherein each of the liquid cooling plates includes cooling flow channels, and a liquid inlet and a liquid outlet communicated with the cooling flow channels; a first end plate and a second end plate, located on two opposite sides of the battery cell module in the first direction; fastening structures, penetrating through the first end plate and the second end plate; and pre-tightening force adjusting structures, each connected to one end of a corresponding fastening structure penetrating out of the second end plate, and each of the pre-tightening force adjusting structures having a first position and a second position where the pre-tightening force adjusting structure abuts against the second end plate to adjust a distance between the first end plate and the second end plate. According to the technical solution of the present invention, a pre-tightening force can be adjusted to ensure that the battery cells have enough heat exchange and heat dissipation space, thereby ensuring the heat exchange effect.

## Description

### Cross-Reference to Related Application

The present application claims priority to patent application No. 2023113633336, entitled "Liquid Cooling Module and Lithium Battery Assembly" filed with the China National Intellectual Property Administration on October 19, 2023.

### Technical Field

The present invention relates to the technical field of batteries, and specifically relates to a liquid cooling module and a lithium battery assembly.

### Background

In recent years, with rapid development of new energy vehicles worldwide, the demand for lithium-ion power batteries has shown explosive growth. Therefore, major car companies and scientific institutions have continuously increased their research and development efforts in electric vehicles, and governments around the world have also implemented various measures to promote new energy vehicles, thus greatly promoting the development of electric vehicles. Compared to traditional fuel vehicles, electric vehicles have zero emissions, replace oil with electricity, and reduce greenhouse gas emissions that pollute the atmosphere, which helps to achieve the Dual Carbon Goals.

The research on three electricity-related technologies (motor, battery, and electronic control) for key parts of electric vehicles is becoming increasingly mature, and the degree of industrialization is improving. Some research institutions and new energy companies have made beneficial explorations in the structure of battery packs. However, a power battery box having high safety, high reliability, and high volume utilization is still a constantly pursued goal in the field of new energy vehicles. Also, liquid cooling technology, as an important means to reduce the risk of thermal runaway, is becoming increasingly popular in more and more battery products.

At present, an existing liquid cooling module includes a battery cell structure, liquid cooling plates arranged on both sides of the battery cell structure, and two end plates arranged at both ends of the battery cell structure, and the two end plates are connected by a locking member to lock the two end plates and the battery cell structure together to form an overall structure. However, with the use of the liquid cooling module, the volume of a battery cell increases after heat release and expansion, and the distance between two adjacent battery cells decreases, resulting in an insufficient heat exchange and dissipation space, and thus being unable to meet a heat exchange requirement. Namely, as the usage time increases, a pre-tightening force of the module will become larger and seriously affect the service life of the battery cells.

### Summary

Some embodiments of the present invention provide a liquid cooling module and a lithium battery assembly that can solve the problem of a significantly increasing pre-tightening force and expansion displacement of a battery cell, which further affects the heat exchange effect in the prior art.

In order to achieve the above objective, one aspect of the present invention provides a liquid cooling module, including: a battery cell module, including liquid cooling plates, and a plurality of battery cells sequentially arranged in a first direction, wherein each of the liquid cooling plates includes cooling flow channels, and a liquid inlet and a liquid outlet communicated with the cooling flow channels; a first end plate and a second end plate, located on two opposite sides of the battery cell module in the first direction; fastening structures, penetrating through the first end plate and the second end plate; and pre-tightening force adjusting structures, wherein each of the pre-tightening force adjusting structures is connected to one end of a corresponding fastening structure penetrating out of the second end plate, and the each of the pre-tightening force adjusting structures has a first position and a second position where the pre-tightening force adjusting structure abuts against the second end plate to adjust a distance between the first end plate and the second end plate.

Further, the each of the pre-tightening force adjusting structures is rotatably arranged relative to the corresponding fastening structure in the fastening structures to convert rotation of the each of the pre-tightening force adjusting structures into a linear motion of the second end plate, so as to move the second end plate in a direction away from or close to the first end plate.

Further, the each of the pre-tightening force adjusting structures includes at least one inequilateral rotating wheel structure and a rotating shaft, wherein the at least one inequilateral rotating wheel structure is rotatably connected to a corresponding fastening structure in the fastening structures via the rotating shaft, an outer peripheral surface of each of the at least one inequilateral rotating wheel structure has a first surface and a second surface, and a distance between the first surface and a rotation center of a corresponding inequilateral rotating wheel structure is greater than a distance between the second surface and the rotation center of the corresponding inequilateral rotating wheel structure.

Further, the outer peripheral surface of the each of the at least one inequilateral rotating wheel structure further includes a plurality of third surfaces, and distances between the plurality of third surfaces and the rotation center of the corresponding inequilateral rotating wheel structure are different.

Further, along a second direction that forms an angle with the first direction, a plurality of at least one inequilateral rotating wheel structures are arranged on both sides of each of the fastening structures, and the plurality of inequilateral rotating wheel structures are fixedly connected; and/or, the liquid cooling module includes two fastening structures and two pre-tightening force adjusting structures corresponding to the two fastening structures, and the two fastening structures are arranged on two opposite sides of the battery cell module in the second direction.

Further, each of the liquid cooling plates is provided with a plurality of cooling flow channels, one end of each of the plurality of cooling flow channels is communicated with the liquid inlet, and the other end of the each of the plurality of cooling flow channels is communicated with the liquid outlet; along a second direction, the liquid inlet and the liquid outlet are located on two opposite sides of the liquid cooling plate; and the plurality of cooling flow channels are sequentially formed in a third direction that forms an angle with the first direction.

Further, the plurality of cooling flow channels include at least a first cooling flow channel and a second cooling flow channel, both the first cooling flow channel and the second cooling flow channel include bent pipes, a cross-sectional area of the first cooling flow channel is larger than a cross-sectional area of the second cooling flow channel, and an unfolded length of the first cooling flow channel is smaller than an unfolded length of the second cooling flow channel.

Further, the liquid cooling module further includes two flow guide structures, wherein the two flow guide structures are arranged at a liquid inlet end and a liquid outlet end of the liquid cooling plate, and each of the flow guide structures includes: a main pipe, in which a flow channel is formed, an end of the flow channel being welded with a pipe plug used to prevent leakage of a cooling liquid; and a plurality of liquid distribution pipes, arranged corresponding to the plurality of liquid cooling plates, an end of each of the plurality of liquid distribution pipes being communicated with the flow channel, and an other end of the each of the plurality of liquid distribution pipe being communicated with the liquid inlet or liquid outlet of a corresponding liquid cooling plate in the liquid cooling plates.

Further, the each of the two flow guide structures further includes a locking member, wherein the locking member includes a first threaded portion, an operating portion, and a second threaded portion that are sequentially connected, turning directions of the first threaded portion and the second threaded portion are opposite, a first threaded hole that matches the first threaded portion is formed in the each of the plurality of liquid distribution pipes, and a second threaded hole that matches the second threaded portion is formed in the main pipe.

Further, along the first direction, a first terminal post and a second terminal post are arranged on two opposite sides of each of the plurality of battery cells respectively, the first terminal post is convex above a surface of a corresponding battery cell, the second terminal post is concave in the surface of the corresponding battery cell, and an avoidance through hole for the terminal posts to pass through is formed in the each of the liquid cooling plates; and/or, the liquid cooling module further includes a plurality of main pipes, each of the plurality of main pipes is provided with a through hole, the through hole is used for part of a corresponding fastening structure in the fastening structures to pass through.

One aspect of the present invention provides a lithium battery assembly, including a box and the liquid cooling module arranged inside the box.

By applying the technical solution of the present invention, the liquid cooling plate is arranged between every two adjacent battery cells. In this way, a large-area cooling method is used between the battery cells, increasing the contact area between the battery cells and the liquid cooling plates and improving the heat exchange efficiency of the battery cells. By providing one liquid cooling plate between every two adjacent battery cells, the liquid cooling module has a good heat exchange effect, and the entire liquid cooling module can be disassembled and reused without damaging the structure thereof. When the pre-tightening force adjusting structures are in the second positions, the second end plate is close to the first end plate. At this time, an accommodating space is small, and the first end plate, the second end plate, and the fastening structures can lock the plurality of battery cells and meet an appropriate distance between two adjacent battery cells to meet a heat exchange requirement. After the liquid cooling module works for a period of time, the pre-tightening force adjusting structures are switched from the second positions to the first positions, and the second end plate is away from the first end plate. At this time, the accommodating space is large, which can ensure an appropriate distance between two adjacent battery cells and provide a sufficient heat exchange space for the battery cells. When the pre-tightening force and expansion displacement of the liquid cooling module significantly increase, by adjusting the pre-tightening force adjusting structures, the liquid cooling module can have a good heat exchange effect.

### Brief Description of the Drawings

The accompanying drawings, which constitute a part of the present invention, are used to provide further understanding of the present invention. The illustrative embodiments and descriptions thereof in the present invention are used to explain the present invention and do not constitute inappropriate limitation of the present invention. In the accompanying drawings:
FIG. 1 shows a schematic structural diagram of a liquid cooling module according to an embodiment of the present invention;
FIG. 2 shows an exploded view of the liquid cooling module of FIG. 1;
FIG. 3 shows a partial enlarged view of the liquid cooling module of FIG. 2;
FIG. 4 shows a side view of the liquid cooling module of FIG. 2;
FIG. 5 shows a schematic structural diagram of an inequilateral rotating wheel structure of the liquid cooling module of FIG. 2;
FIG. 6 shows a schematic structural diagram of a second end plate of the liquid cooling module of FIG. 2;
FIG. 7 shows a schematic structural diagram of a liquid cooling plate of the liquid cooling module of FIG. 2;
FIG. 8 shows a schematic diagram of an internal structure of the liquid cooling plate of FIG. 7;
FIG. 9 shows a schematic structural diagram of a main pipe of the liquid cooling module of FIG. 2;
FIG. 10 shows a schematic structural diagram of a liquid distribution pipe of the liquid cooling module of FIG. 2;
FIG. 11 shows a schematic structural diagram of a battery cell of the liquid cooling module of FIG. 2 from one perspective; and
FIG. 12 shows a schematic structural diagram of the battery cell of FIG. 11 from another perspective.

The above accompanying drawings include the following reference numerals:
1. Rotating shaft; 2. Operating part; 211. First surface; 212. Second surface; 213. Third surface; 22. Inequilateral rotating wheel structure; 221. Eccentric hole; 301. First end plate; 302. Second end plate; 4. Battery cell; 41. First terminal post; 42. Second terminal post; 5. Liquid cooling plate; 501. Liquid inlet; 502. Liquid outlet; 505. Avoidance through hole; 53. First cooling flow channel; 54. Second cooling flow channel; 7. Fastening structure; 71. Rod; 72. Limiting plate; 8. Main pipe; 81. Flow channel; 82. Through hole; 9. Liquid distribution pipe; and 10. Locking member.

### Detailed Description of the Embodiments

It should be noted that the embodiments and features in the embodiments of the present invention can be combined with each other without conflict. The present invention will be described in detail below with reference to the accompanying drawings and in conjunction with the embodiments.

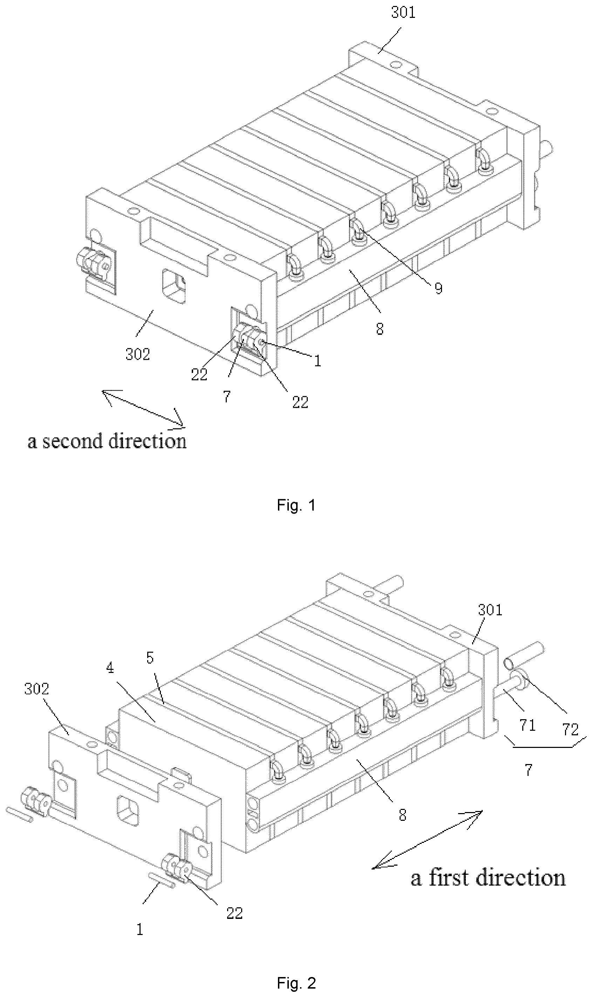

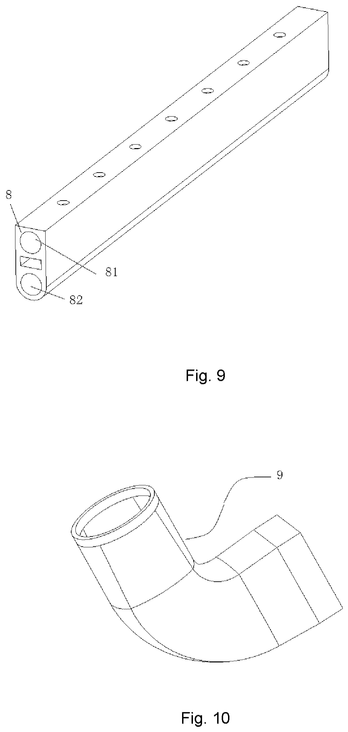

Referring to Fig. 1 to Fig. 12, the present invention provides a liquid cooling module, including: a battery cell module, including at least one liquid cooling plate 5, and a plurality of battery cells 4 sequentially arranged in a first direction, wherein a liquid cooling plate 5 is arranged between two adjacent battery cells 4, and each of the at least one liquid cooling plate 5 includes at least one cooling flow channel, and a liquid inlet 501 and a liquid outlet 502 communicated with the at least one cooling flow channel; a first end plate 301 and a second end plate 302, located on two opposite sides of the battery cell module in the first direction; a plurality of fastening structures 7, penetrating through the first end plate 301 and the second end plate 302, wherein the plurality of fastening structures 7, the first end plate 301, and the second end plate 302 enclose an accommodating space for accommodating the battery cell module; and pre-tightening force adjusting structures, wherein each of the pre-tightening force adjusting structures is connected to one end of a corresponding fastening structure penetrating out of the second end plate 302, and the each of the pre-tightening force adjusting structures has a first position and a second position where the pre-tightening force adjusting structure abuts against the second end plate 302, so as to move the second end plate 302 in a direction away from or close to the first end plate 301.

It should be noted that the "pre-tightening force of the liquid cooling module" herein refers to a compressive force generated by expansion of the liquid cooling module on the first end plate 301 and the second end plate 302 in the first direction. In the prior art, the volume of a battery cell increases after heat release and expansion (i.e., a pre-tightening force increases), and the distance between two adjacent battery cells decreases, resulting in an insufficient heat exchange and dissipation space. In some embodiments of the present invention, the distance between the first end plate 301 and the second end plate 302 is changed by providing the pre-tightening force adjusting structures, thereby ensuring that the liquid cooling module has a larger heat exchange space and better heat exchange effect.

In the technical solution, the liquid cooling plate 5 is arranged between every two adjacent battery cells 4. In this way, a large-area cooling method is used between the battery cells 4, increasing the contact area between the battery cells 4 and the corresponding liquid cooling plates 5 and improving the heat exchange efficiency of the battery cells 4. By arranging one liquid cooling plate 5 between every two adjacent battery cells 4, the liquid cooling module has a good heat exchange effect, and the entire liquid cooling module can be disassembled and reused without damaging the structure thereof. When the pre-tightening force adjusting structures are in the second positions, the second end plate 302 is close to the first end plate 301. At this time, an accommodating space is small, and the first end plate 301, the second end plate 302, and the fastening structures 7 are able to lock the plurality of battery cells 4 and meet an appropriate distance between two adjacent battery cells 4 to meet a heat exchange requirement. After the liquid cooling module works for a period of time, the pre-tightening force adjusting structures are switched from the second positions to the first positions, and the second end plate 302 is away from the first end plate 301. At this time, the accommodating space is large, which can ensure an appropriate distance between two adjacent battery cells 4 and provide a sufficient heat exchange space for the battery cells 4.

By the arrangement, when the pre-tightening force and expansion displacement of the liquid cooling module significantly increase, by adjusting the pre-tightening force adjusting structures, the liquid cooling module can have a good heat exchange effect.

As shown in Fig. 1 to Fig. 5, in the embodiments of the present application, the pre-tightening force adjusting structures are rotatably arranged relative to the fastening structures 7 to convert rotation of the pre-tightening force adjusting structures into a linear motion of the second end plate 302.

In the technical solution, each of the pre-tightening force adjusting structures includes an inequilateral rotating wheel structure 22 and a rotating shaft 1. The inequilateral rotating wheel structure 22 is rotatably connected to a corresponding fastening structure 7 by the rotating shaft 1. An outer peripheral surface of the inequilateral rotating wheel structure 22 has a first surface 211 and a second surface 212, and the distance between the first surface 211 and a rotation center of the inequilateral rotating wheel structure 22 is greater than the distance between the second surface 212 and the rotation center of the inequilateral rotating wheel structure 22.

In the technical solution, an eccentric hole 221 is formed in the inequilateral rotating wheel structure 22, and a central axis of the eccentric hole 221 is the center of rotation of the inequilateral rotating wheel structure 22. The eccentric hole 221 is a threaded hole, and a mounting through hole is formed in each of the fastening structures 7. The rotating shaft is a pin shaft, and the pin shaft is connected to the eccentric hole 221 by threads and passes through the mounting through hole. In this way, the inequilateral rotating wheel structure 22 is rotatably connected to the corresponding fastening structure 7 via the rotating shaft 1, and the pin shaft can be prevented from detaching from the inequilateral rotating wheel structure 22.

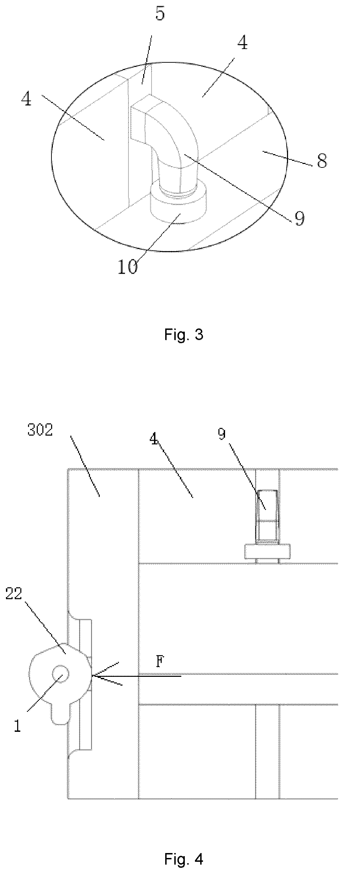

By the arrangement, when the first surface 211 is in contact with the second end plate 302, the distance between the rotation center of the inequilateral rotating wheel structure 22 and the second end plate 302 is large, and the pre-tightening force adjusting structures are in the second positions. When the second surface 212 is in contact with the second end plate 302, the distance between the rotation center of the inequilateral rotating wheel structure 22 and the second end plate 302 is small, and the pre-tightening force adjusting structures are in the first positions. The pre-tightening force adjusting structures have two levels. In this way, when the first surface 211 or the second surface 212 is in contact with the second end plate 302, under the pre-tightening force in the liquid cooling module (i.e., an extrusion force generated by the expansion of the liquid cooling module on the first end plate 301 and the second end plate 302), the liquid cooling module applies a force F on the second end plate 302 and the inequilateral rotating wheel structure 22 as shown in Fig. 4. The force F is horizontally leftward in Fig. 4 and acts on the rotation center of the inequilateral rotating wheel structure 22 (i.e., the eccentric hole 221). In this way, the liquid cooling module does not apply any additional deflection torque on the inequilateral rotating wheel structure 22, and the inequilateral rotating wheel structure 22 can remain in the position.

In another embodiment of the present invention, the eccentric hole 221 may also be a through hole with a smooth inner wall, and the pin shaft is in interference fit with the eccentric hole 221 and passes through the mounting through hole. In this way, the inequilateral rotating wheel structure 22 can be rotatably connected to the corresponding fastening structure 7, and the pin shaft can be prevented from detaching from the inequilateral rotating wheel structure 22.

As shown in Fig. 1 to Fig. 5, in the embodiments of the present application, the outer peripheral surface of the inequilateral rotating wheel structure 22 further includes a plurality of third surfaces 213. The distances between the plurality of third surfaces 213 and the rotation center of the inequilateral rotating wheel structure 22 are different.

In the technical solution, the first surface 211, the second surface 212, and the plurality of third surfaces 213 are sequentially connected end-to-end, and the plurality of third surfaces 213 can all be in contact with the second end plate 302, such that the pre-tightening force adjusting structure has three or more levels.

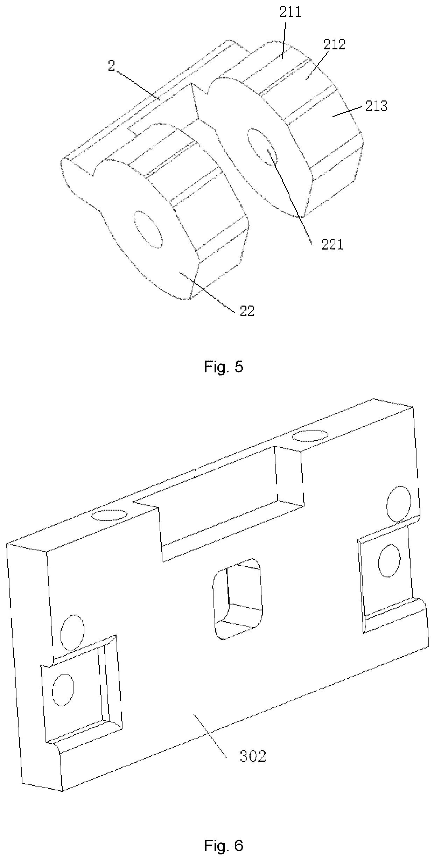

As shown in Fig. 5, in the embodiments of the present invention, the pre-tightening force adjusting structure includes a plurality of inequilateral rotating wheel structures 22. Along the second direction that forms an angle with the first direction, the inequilateral rotating wheel structures 22 are arranged on both sides of each of the fastening structures 7, and the plurality of inequilateral rotating wheel structures 22 are fixedly connected.

By the arrangement, the rotating shaft 1 penetrates through the two inequilateral rotating wheel structures 22 and the fastening structure 7. In this way, due to the threaded connection between the rotating shaft 1 and the inequilateral rotating wheel structures 22, the rotating shaft 1 can be prevented from detaching from the corresponding fastening structure 7 to ensure stability.

As shown in Fig. 5, in the embodiments of the present invention, the liquid cooling module includes two fastening structures 7 and two pre-tightening force adjusting structures corresponding to the two fastening structures 7 one by one. The two fastening structures are arranged on two opposite sides of the battery cell module in the second direction and are able to adjust the pre-tightening force on both sides of the battery cell module.

In one embodiment of the present invention, the liquid cooling module may also include three or more fastening structures, and the pre-tightening force adjusting structures are arranged corresponding to the fastening structures.

As shown in Fig. 5, in the embodiments of the present invention, the liquid cooling module further includes an operating part 2. Each pre-tightening force adjusting structure includes two inequilateral rotating wheel structures 22, and the two inequilateral rotating wheel structures 22 are connected to the operating part 2 respectively. In this way, the two inequilateral rotating wheel structures 22 can be adjusted simultaneously via the operating part 2, and independent adjustment may be performed by each pre-tightening force adjusting structure.

In the embodiments of the present invention, the structures of the first end plate 301 and the second end plate 302 are the same.

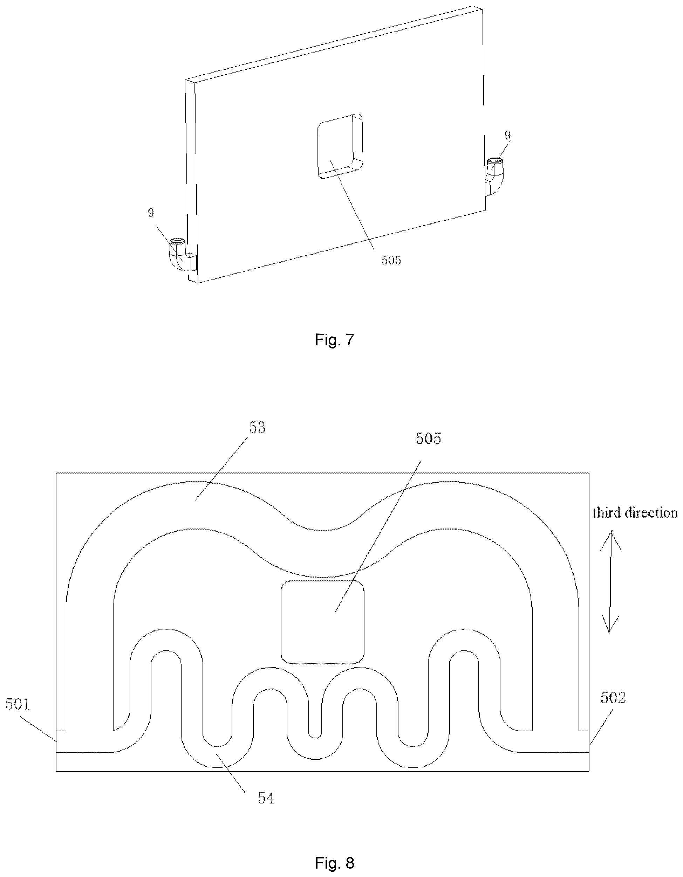

As shown in Fig. 7 and Fig. 8, in the embodiments of the present invention, a plurality of cooling flow channels are formed in each of the liquid cooling plates 5. One end of each of the plurality of cooling flow channels is communicated with the liquid inlet 501, and the other end of the each of the plurality of cooling flow channels is communicated with the liquid outlet 502. Along the second direction, the liquid inlet 501 and the liquid outlet 502 are located on two opposite sides of the liquid cooling plate 5. The plurality of cooling flow channels are sequentially formed in a third direction that forms an angle with the first direction.

In the technical solution, the liquid inlet 501 and the liquid outlet 502 are located at the same height. By providing the plurality of cooling flow channels, the battery cell 4 can be cooled in the third direction to enlarge the cooling area.

As shown in Fig. 7 and Fig. 8, in the embodiments of the present invention, the plurality of cooling flow channels include at least a first cooling flow channel 53 and a second cooling flow channel 54. Both the first cooling flow channel 53 and the second cooling flow channel 54 include bent pipes. A cross-sectional area of the first cooling flow channel 53 is larger than a cross-sectional area of the second cooling flow channel 54, and an unfolded length of the first cooling flow channel 53 is smaller than an unfolded length of the second cooling flow channel 54.

By the arrangement, the liquid flow in the first cooling flow channel 53 can be ensured to be equal to that in the second cooling flow channel 54, thereby ensuring a uniform cooling effect in the flow areas of the first cooling flow channel 53 and the second cooling flow channel 54.

As shown in Fig. 1 to Fig. 9, in the embodiments of the present invention, the liquid cooling module further includes two flow guide structures. The two flow guide structures are arranged at a liquid inlet end and a liquid outlet end of the each of the liquid cooling plates 5. Each flow guide structure includes: a main pipe 8, in which a flow channel 81 is formed; and a plurality of liquid distribution pipes 9, arranged corresponding to the plurality of liquid cooling plates 5. One end of each of the plurality of liquid distribution pipes is communicated with the flow channel 81, and the other end of the each of the plurality of liquid distribution pipes 9 is communicated with the liquid inlet 501 or liquid outlet 502 of a corresponding liquid cooling plate 5.

In the technical solution, the flow guide structures further include a liquid inlet pipe and a liquid outlet pipe. One end of the flow channel 81 is communicated with the liquid inlet pipe or the liquid outlet pipe, and the other end of the flow channel is provided with a plug to prevent a liquid from flowing out.

By the arrangement, a coolant sequentially flows through the liquid inlet pipe, the main pipe 8 of one flow guide structure, and the liquid distribution pipes 9 to enter the liquid cooling plates 5. A liquid discharged from the liquid cooling plates 5 then flows into the liquid outlet pipe through the other flow guide structure.

In one embodiment, both the liquid inlet pipe and the liquid outlet pipe pass through a through hole in the first end plate 301 and are connected to the main pipes 8, to reduce the points of risks of liquid leakage.

As shown in Fig. 1 to Fig. 9, in the embodiments of the present invention, a through hole 82 for part of a corresponding fastening structure to pass through is formed in the main pipe 8.

In the technical solution, penetration through holes are formed in both the first end plate 301 and the second end plate 302, and the each of the fastening structures 7 includes a rod 71 and a limiting plate 72, which have a sequentially increasing outer diameter. The rod 71 penetrates through the through hole 82 and the penetration through holes in the first end plate 301 and the second end plate 302. The mounting through hole for the pin shaft to penetrate through is formed in one end of the rod 71, and the other end of the rod 71 is connected to the limiting plate 72. The limiting plate 72 is located on a side of the first end plate 301 away from the liquid cooling module. In this way, the limiting plate 72 can stop and limit the rod 71 and the first end plate 301 in the first direction, to prevent the rod 71 from detaching from the first end plate 301. Since the rod 71 penetrates through the through hole 82 in the main pipe 8, the main pipe 8 can also be prevented from detaching from the first end plate 301.

By the arrangement, the main pipe 8 can limit the fastening structures, the first end plate 301, and the second end plate 302, to prevent the battery cells 4 from being over-compressed. In this way, the flow channel 81 and the through hole 82 can be integrated in one pipe via the main pipe 8 to save space.

In the embodiments of the present invention, one end of the flow channel 81 is communicated with an external coolant inlet pipe, and the other end of the flow channel 81 is welded with a pipe plug to prevent coolant leakage.

As shown in Fig. 1 and Fig. 2, in the embodiments of the present invention, each of the flow guide structures further includes a locking member 10. The locking member 10 includes a first threaded portion, an operating portion, and a second threaded portion that are sequentially connected, and the turning directions of the first threaded portion and the second threaded portion are opposite. A first threaded hole that matches the first threaded portion is formed in each of the liquid distribution pipes 9, and a second threaded hole that matches the second threaded portion is formed in the main pipe 8.

By the arrangement, the operating portion is able to be rotated clockwise or counterclockwise to lock or release the locking member 10 with or from the main pipe 8 or the liquid distribution pipe 9 respectively to facilitate operation.

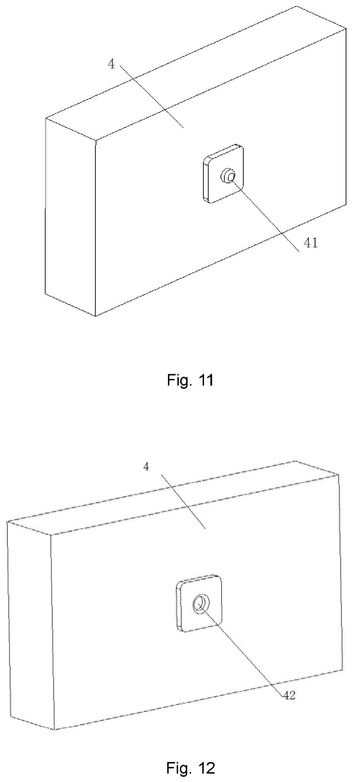

As shown in Fig. 11 and Fig. 12, in the embodiments of the present invention, along the first direction, a first terminal post 41 and a second terminal post 42 are arranged on two opposite sides of each battery cell 4 respectively. The first terminal post 41 protrudes from the surface of the battery cell 4. The second terminal post 42 is recessed into the surface of the battery cell 4. Each of the liquid cooling plates 5 is provided with at least one avoidance through hole 505 for the terminal posts to pass through.

In the technical solution, the first terminal post 41 and the second terminal post 42 are both located at the center of the battery cell 4. When the battery cell module is assembled, the terminal posts of two adjacent battery cells 4 are directly connected, thereby avoiding use of a series terminal block, improving the assembly efficiency, and ensuring that a module structure is detachable.

Some embodiments of the present invention further provide a lithium battery assembly, including a box and the liquid cooling module arranged in the box.

It should be noted that when actually mounted, both the upper surface and the lower surface of the liquid cooling module can be used as mounting surfaces to be fixedly connected to the box. Module mounting holes are formed in both the first end plate 301 and the second end plate 302 and used to fix the liquid cooling module to the box.

In one embodiment of the present invention, the module mounting hole of at least one of the first end plate 301 and the second end plate 302 is a waist-type hole. In this way, as the pre-tightening force of the liquid cooling module changes, and the distance between the first end plate 301 and the second end plate 302 in the first direction changes, the module mounting holes are ensured to always correspond to mounting holes in the box, thereby fixing the liquid cooling module to the box.

The lithium battery assembly of the present invention has all the technical features and effects of the aforementioned liquid cooling module, and descriptions thereof are omitted herein.

From the descriptions above, it can be seen that the embodiments of the present invention achieve the following technical effects: the liquid cooling plate is arranged between every two adjacent battery cells, in this way, a large-area cooling method is used between the battery cells, increasing the contact area between the battery cells and the liquid cooling plates and improving the heat exchange efficiency of the battery cells. By providing one liquid cooling plate between every two adjacent battery cells, the liquid cooling module has a good heat exchange effect, and the entire liquid cooling module can be disassembled and reused without damaging the structure thereof. When the pre-tightening force adjusting structures are in the second positions, the second end plate is close to the first end plate. At this time, an accommodating space is small, and the first end plate, the second end plate, and the fastening structures can lock the plurality of battery cells and meet an appropriate distance between two adjacent battery cells to meet a heat exchange requirement. After the liquid cooling module works for a period of time, the pre-tightening force adjusting structures are switched from the second positions to the first positions, and the second end plate is away from the first end plate. At this time, the accommodating space is large, which can ensure an appropriate distance between two adjacent battery cells and provide a sufficient heat exchange space for the battery cells. When the pre-tightening force and expansion displacement of the liquid cooling module significantly increase, by adjusting the pre-tightening force adjusting structures, the liquid cooling module has a good heat exchange effect.

It is apparent that the described embodiments are merely some rather than all of the embodiments of the present invention. Based on the embodiments in the present invention, all other embodiments derived by those of ordinary skill in the art without any creative effort shall fall within the protection scope of the present invention.

It should be noted that the terms used herein are merely for describing specific implementations, but are not intended to limit exemplary implementations according to the present application. As used herein, unless explicitly specified in the context, a singular form is also intended to include a plural form. In addition, it should also be understood that when the term "include" and/or "comprise" is used herein, it indicates the presence of features, steps, operations, devices, assemblies, and/or combinations thereof.

The above are merely embodiments of the present invention and are not intended to limit the present invention. Those skilled in the art can make modifications and changes to the present invention. Any modification, equivalent replacement, improvement, or the like made within the spirit and principle of the present invention shall fall within the protection scope of the present invention.

## Claims

1. A liquid cooling module, comprising:
a battery cell module, comprising liquid cooling plates (5), and a plurality of battery cells (4) sequentially arranged in a first direction;
a first end plate (301) and a second end plate (302), located on two opposite sides of the battery cell module in the first direction;
wherein each of the liquid cooling plates (5) comprises at least one cooling flow channel, and a liquid inlet (501) and a liquid outlet (502) communicated with the at least one cooling flow channel;
fastening structures (7), penetrating through the first end plate (301) and the second end plate (302); and
pre-tightening force adjusting structures, wherein each of the pre-tightening force adjusting structures is connected to one end of a corresponding fastening structure penetrating out of the second end plate (302), and the each of the pre-tightening force adjusting structures has a first position and a second position where the pre-tightening force adjusting structure abuts against the second end plate (302) to adjust a distance between the first end plate (301) and the second end plate (302).

2. The liquid cooling module according to claim 1, wherein the each of the pre-tightening force adjusting structures is rotatably arranged relative to the corresponding fastening structure in the fastening structures (7) to convert rotation of the each of the pre-tightening force adjusting structures into a linear motion of the second end plate (302), so as to move the second end plate (302) in a direction away from or close to the first end plate (301).

3. The liquid cooling module according to claim 1, wherein the each of the pre-tightening force adjusting structures comprises at least one inequilateral rotating wheel structure (22) and a rotating shaft (1), wherein the at least one inequilateral rotating wheel structure (22) is rotatably connected to a corresponding fastening structure (7) in the fastening structures via the rotating shaft (1), an outer peripheral surface of each of the at least one inequilateral rotating wheel structure (22) has a first surface (211) and a second surface (212), and a distance between the first surface (211) and a rotation center of a corresponding inequilateral rotating wheel structure (22) is greater than a distance between the second surface (212) and the rotation center of the corresponding inequilateral rotating wheel structure (22).

4. The liquid cooling module according to claim 3, wherein the outer peripheral surface of the each of the at least one inequilateral rotating wheel structure (22) further comprises a plurality of third surfaces (213), and distances between the plurality of third surfaces (213) and the rotation center of the corresponding inequilateral rotating wheel structure (22) are different.

5. The liquid cooling module according to claim 3, wherein along a second direction that forms an angle with the first direction, both sides of each of the fastening structures (7) are provided with a plurality of at least one inequilateral rotating wheel structures (22), and the plurality of inequilateral rotating wheel structures (22) are fixedly connected; and/or,
the liquid cooling module comprises two fastening structures and two pre-tightening force adjusting structures corresponding to the two fastening structures, and the two fastening structures are arranged on two opposite sides of the battery cell module in the second direction.

6. The liquid cooling module according to any one of claims 1 to 5, wherein each of the liquid cooling plates (5) is provided with a plurality of cooling flow channels, one end of each of the plurality of cooling flow channels is communicated with the liquid inlet (501), and the other end of the each of the plurality of cooling flow channels is communicated with the liquid outlet (502); along a second direction that forms an angle with the first direction, the liquid inlet (501) and the liquid outlet (502) are located on two opposite sides of the liquid cooling plate (5); and the plurality of cooling flow channels are sequentially formed in a third direction that forms an angle with the first direction.

7. The liquid cooling module according to claim 6, wherein the plurality of cooling flow channels comprise at least a first cooling flow channel (53) and a second cooling flow channel (54), both the first cooling flow channel (53) and the second cooling flow channel (54) comprise bent pipes, a cross-sectional area of the first cooling flow channel (53) is larger than a cross-sectional area of the second cooling flow channel (54), and an unfolded length of the first cooling flow channel (53) is smaller than an unfolded length of the second cooling flow channel (54).

8. The liquid cooling module according to any one of claims 1 to 5, wherein the liquid cooling module further comprises two flow guide structures, wherein the two flow guide structures are arranged at a liquid inlet end and a liquid outlet end of each of the liquid cooling plates (5), and each of the two flow guide structures comprises:
a main pipe (8), in which a flow channel (81) is formed, an end of the flow channel (81) being welded with a pipe plug used to prevent leakage of a cooling liquid; and
a plurality of liquid distribution pipes (9), arranged corresponding to the liquid cooling plates (5), an end of each of the plurality of liquid distribution pipes (9) being communicated with the flow channel (81), and an other end of the each of the plurality of liquid distribution pipes (9) being communicated with the liquid inlet (501) or liquid outlet (502) of a corresponding liquid cooling plate in the liquid cooling plates (5).

9. The liquid cooling module according to claim 8, wherein the each of the two flow guide structures further comprises a locking member (10), wherein the locking member (10) comprises a first threaded portion, an operating portion, and a second threaded portion that are sequentially connected, turning directions of the first threaded portion and the second threaded portion are opposite, a first threaded hole that matches the first threaded portion is formed in the each of the plurality of liquid distribution pipes (9), and a second threaded hole that matches the second threaded portion is formed in the main pipe (8).

10. The liquid cooling module according to any one of claims 1 to 5, wherein along the first direction, a first terminal post (41) and a second terminal post (42) are arranged on two opposite sides of each of the plurality of battery cells (4) respectively, the first terminal post (41) is convex above a surface of a corresponding battery cell (4), the second terminal post (42) is concave in the surface of the corresponding battery cell (4), and an avoidance through hole (505) for terminal posts to pass through is formed in the each of the liquid cooling plates (5); and/or,
the liquid cooling module further comprises a plurality of main pipes (8), each of the plurality of main pipes (8) is provided with a through hole (82), the through hole (82) is used for part of a corresponding fastening structure in the fastening structures to pass through.

11. A lithium battery assembly, comprising a box and the liquid cooling module according to any one of claims 1 to 10, wherein the liquid cooling module is arranged inside the box.
